Europäisches Patentamt

European Patent Office

Office européen des brevets

(19)

(11) **EP 1 552 875 A1**

(12) ## EUROPEAN PATENT APPLICATION

(43) Date of publication:
**13.07.2005 Bulletin 2005/28**

(51) Int Cl.7: **B01D 53/22**, B01D 67/00,
B01D 69/14, B01J 20/32

(21) Application number: **04030656.5**

(22) Date of filing: **23.12.2004**

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(30) Priority: **08.01.2004 KR 2004001065**

(71) Applicant: **Korea Institute of Science and
Technology
Seoul 136-791 (KR)**

(72) Inventors:
• **Kang, Yong Soo
Seongbuk-gu Seoul 136-784 (KR)**

• **Jung, Bumsuk
Seongbuk-gu Seoul 136-110 (KR)**
• **Kim, Jong Hak
Dobong-gu Seoul 132-741 (KR)**
• **Won, Jongok
Dongdaemun-gu Seoul 130-775 (KR)**
• **Char, Kook Heon
Seocho-gu Seoul 137-806 (KR)**
• **Kang, Sang Wook
Dongdaemun-gu Seoul 130-820 (KR)**

(74) Representative: **Schorr, Frank, Dr. et al
Diehl Glaeser Hiltl & Partner
Augustenstrasse 46
80333 München (DE)**

(54) **Facilitated transport membranes for an alkene hydrocarbon separation**

(57) There is provided a facilitated transport membrane for separating alkene hydrocarbon comprising a solid polymer electrolyte layer consisting a transition metal salt, a polymer, an ionic liquid, and a porous supported membrane. The facilitated transport membrane of the present invention shows high selectivity and permeability for the alkene hydrocarbon. It further maintains the complex's activity as a carrier during a long operation, wherein the complex is formed by an interaction of the transition metal ion with the polymer ligand within the solid polymer electrolyte.

EP 1 552 875 A1

**Description**

The present invention relates to a facilitated transport membrane having improved permeability and selectivity for alkene hydrocarbon comprising a solid polymer electrolyte layer and a porous supported membrane, wherein the solid polymer electrolyte layer comprises a transition metal salt, a polymer for forming a complex with a metal ion of the transition metal salt and an ionic liquid.

Alkene hydrocarbons are mainly generated by heat degradation of naphtha at a high temperature, which is a by-product obtained from a petroleum refining process. Since alkene hydrocarbons, which are industrially important and serve as the basis of the petrochemical industry, are commonly produced together with alkane hydrocarbons (e. g., ethane and propane), the techniques for separating the two are very important in the relevant industries.

A typical distillation method has been widely employed for separating a mixture of alkene/alkane hydrocarbons, such as ethylene/ethane and propylene/propane. However, since the molecular size and physical properties (e. g., relative volatility) of alkene hydrocarbons are similar to those of alkane hydrocarbons, the separation of the two requires tremendous resources in terms of equipment and energy.

For example, the distillation method currently used in the art needs to operate a distillation column, which has about 120 to 160 stages, at a low temperature of -30 °C and a high pressure of about 20 Pa for the separation of ethylene/ethane. Further, such distillation method runs a distillation column, which has about 180 to 200 stages, at a low temperature of -30 °C and a several pressure with a reflux ratio of over 10 for the separation of propylene/propane. Therefore, there is a need to develop a new method for separating alkene/alkane hydrocarbons that can substitute the conventional distillation method.

As an alternative method for the conventional distillation method, a method using a membrane has been suggested. The membrane technique has made significant progresses during past several decades in separating gaseous mixtures such as nitrogen/oxygen, nitrogen/carbon dioxide and nitrogen/methane.

However, the typical gaseous separation membrane does not usually succeed in separating the mixture of alkene/alkane hydrocarbons due to their similar molecular and physical properties. As a membrane showing high separation efficiency for the mixture of alkene/alkane, a facilitated transport membrane, which is based on a different concept from the typical gaseous membrane, has been developed.

The separation of a mixture using a membrane is accomplished by using the difference in permeability of each ingredient consisting the mixture. Most membrane materials show a negative correlation between permeability and selectivity, which results in limiting their application. However, if a facilitated transport phenomenon is applied to the membrane technique, it will be capable of simultaneously increasing the permeability and selectivity, thus enlarging its range of application. When the membrane contains a carrier, which is capable of reacting selectively and reversibly with a specific ingredient in the mixture, an additional mass transport occurs due to a reversible reaction between the carrier and the specific ingredient. This results in increasing the efficiency of the whole mass transport. Therefore, the whole mass transport can be described as a sum of mass transport according to the Fick's law, which is caused by the reversible reaction of the carrier. This phenomenon is referred to as facilitated transport.

A supported liquid membrane, which is one of the membranes formed by employing the concept of facilitated transport, has been developed. The supported liquid membrane is prepared by dissolving a carrier capable of promoting the mass transfer in a solvent (e.g., water) and filling a porous membrane with the resulting solution. Such supported liquid membrane is generally successful.

For example, the Steigelmann and Hughes references (U.S. Patent Nos. 3,758,603 and 3,758,605, respectively) disclose a supported liquid membrane, wherein the selectivity for ethylene/ethane ranges from 400 to 700 and the permeability to ethylene is 60 GPU (1 GPU = 1 $\times$ 10$^{-6}$ cm$^3$ (STP)/cm$^2$·sec·cmHg). Such permeable separation efficiencies are considered to be satisfactory. However, since such supported liquid membrane applies the facilitated transport efficiency only under a humidified condition, it is not possible to maintain high permeable separation efficiency over an extended time period due to the eventual loss of the solvent and the lowering of the separation efficiency.

In order to solve the above problem associated with the supported liquid membrane, U.S. Pat. No. 4,318,714 issued to Kimura, et al. discloses an ion-exchange membrane exhibiting facilitated transport of a certain gas by attaching a suitable counter-ion to the ion-exchange membrane matrix, which reacts reversibly with the gas in order to be separated. However, such ion-exchange membrane exhibits the facilitated transport property only under a humidified condition similar to the supported liquid membranes described in the Steigelmann and Hughes references.

U.S. Pat. Nos. 5,015,268 and 5,062,866 disclose polymeric membranes for separating aliphatically unsaturated hydrocarbons from hydrocarbon mixtures. The polymeric membrane comprises a hydrophilic polymer such as a polyvinylalcohol, which contains metals capable of being in complex with the aliphatically unsaturated hydrocarbons. However, such polymeric membranes can exhibit satisfactory separation efficiency only when a feed stream is saturated with steam by bubbling it with water before contacting the membrane or swelling the membrane by using ethylene glycol or water.

All exemplary membranes described above must be maintained at a humidified condition so that they contain water or a similar solvent. In case of utilizing these membranes for the separation of a dry hydrocarbon gaseous mixture (e.g., alkene/alkane) having no solvent such as water, the loss of the solvent over time is inevitable. Therefore, there has been developed a method for supplementing a solvent periodically in order to maintain the membrane at a constant humidified condition. However, it is impossible to apply such method in a practical manner and the prepared membranes are typically unstable.

U.S. Pat. No. 4,614,524 issued to Kraus, et al. describes a water-free immobilized liquid membrane for facilitated transport of aliphatically unsaturated hydrocarbons. The membranes are prepared by chemically bonding transition metal ions to a semi-permeable ion exchange membrane (e.g., Nafion) and are then plasticized by the treatment with glycerol. However, their selectivity with respect to a dry ethylene/ethane mixture was too low (i.e., about 10 under ambient condition) for practical use. Further, the plasticizer became lost over time and the membrane did not show any selectivity when it did not undergo plasticization.

As described above, since utilizing the conventional polymer membranes cannot separate the mixture of alkene/alkane hydrocarbons having similar molecular and physical properties, there is a need to develop a facilitated transport membrane capable of selectively separating alkene from the mixture. However, the conventional transport membranes have to maintain the activity of their carriers by employing several methods such as filling a porous membrane with a carrier containing solution, adding a volatile plasticizer, saturating a feed gas with steam and the like. Further, these facilitated transport membranes are not practical since their constituents become lost over time, thus deteriorating the stability of the membrane. In addition, the solvent provided periodically to the membrane in order to maintain its activity has to be discarded from the final product.

Accordingly, in order to substitute the conventional distillation method, which is subjected to high costs for equipment and energy, for the separation of alkene/alkane hydrocarbons, there is a need for a facilitated transport membrane showing high selectivity and permeability while not containing any volatile ingredients, thus being able to maintain its activity over a long operational time under dry feed gaseous conditions.

The present invention provides an improved facilitated transport membrane, which was prepared by incorporating a nonvolatile polymer electrolyte used for the preparation of a polymer cell into the facilitated transport membrane. The facilitated transport membrane of the present invention shows high permeability and selectivity for unsaturated hydrocarbons such as alkene and has no problem associated with stability such as the loss of a carrier. Thus, such membrane can maintain its activity for a long time.

Specifically, the object of the present invention is to provide a facilitated transport membrane having improved properties such as high permeability and selectivity for alkene hydrocarbons and which can maintain its activity over time under dry operating conditions in liquid solvent-free state and at a high temperature.

The present invention relates to a facilitated transport membrane having improved permeability and selectivity for alkene hydrocarbon comprising a solid polymer electrolyte layer and a porous supported membrane, wherein the solid polymer electrolyte layer consists a transition metal salt, a polymer for forming a complex with a metal ion of the transition metal salt and an ionic liquid. In the facilitated transport membrane of the present invention, a polymer ligand within the nonvolatile polymer electrolyte is capable of forming a complex with a metal ion of the transition metal salt. Further, a double bond of the alkene hydrocarbon reacts selectively and reversibly with the metal ion of the complex formed thereby, which results in promoting the transport of alkene. Thus, the alkene hydrocarbon can be selectively separated from the alkene/alkane hydrocarbon mixture.

In particular, the facilitated transport membrane of the present invention contains the ionic liquid that improves the motility of a polymer chain within the polymer electrolyte membrane and forms a complex with anions of the transition metal salt. As such, it shows high permeability and selectivity for the alkene hydrocarbon and maintains the facilitated transport efficiency to the mixture of alkene/alkane hydrocarbons over time. Accordingly, although a polymer containing a hetero-atom (e.g., oxygen, nitrogen, etc.) may be used in the present invention, the facilitated transport membrane can maintain its permeability without causing the loss of efficiency in the polymer electrolytic membrane, and specifically reducing the transition metal ion into a transition metal particle.

Further, the facilitated transport membrane including the ionic liquid of the present invention is capable of utilizing $AgNO_3$ as a carrier, which could not have been used before as a carrier.

The present invention is described below in detail.

The facilitated transport membrane of the present invention comprises a polymer electrolyte layer and a porous supported membrane holding the layer, wherein the polymer electrolyte layer consists a transition metal salt, a polymer and an ionic liquid. Such layer is in a solid state during an operating temperature.

The hydrocarbon mixture to be separated in the present invention is a mixture, which includes one or more alkene hydrocarbons and one or more alkane hydrocarbons or other gases. Representative examples of the preferred alkene hydrocarbons are ethylene, propylene, butylene, 1,3-butadiene, isobutylene, isoprene and the like. Those of the alkane hydrocarbons are methane, ethane, propane, butane, isobutane and the like. Further, the representative examples of the other gases are oxygen, nitrogen, carbon dioxide, carbon monoxide, hydrogen gas, water and the like.

The solid polymer electrolyte layer of the present invention comprises a transition metal ion acting as a carrier and a nonvolatile polymer containing an ionic liquid. The transition metal salt within the electrolyte is not simply dispersed or mixed therein, but dissociated into metal cations and anions on the polymer. This makes it possible to form a complex by interacting the transition metal ion with the polymer. Therefore, unlike the conventional membranes, the membrane of the present invention does not require water to be supplied in order to maintain the carrier's activity and can selectively promote the transport of alkene hydrocarbon at a dry condition.

In the facilitated transport membrane of the present invention, the key factor influencing the selective separation of alkene hydrocarbon is the electrolyte, which comprises a transition metal salt acting as a carrier and a polymer containing an ionic liquid. The properties of such electrolyte determine the efficiency of selectively separating the alkene hydrocarbon from its corresponding alkane hydrocarbon in the membrane of the present invention.

The transition metal salt is dissociated into metal cations and salt anions on the polymer. The metal cations react reversibly with the double bonds of the alkene hydrocarbon to form a complex, thereby participating directly in the facilitated transport of alkene hydrocarbon. That is, the metal cation is placed into the interaction with the salt anion, the polymer and the alkene hydrocarbon within the electrolyte. Therefore, it is important to select each component for the preparation of the membrane having high selectivity and permeability. Further, the stability of the metal complex formed by the interaction with the selected polymer plays an important role in utilizing the membrane for an operation of long duration.

It has been well known in the art that the transition metal reacts reversibly with the alkene hydrocarbon in a solution *(see* J. P. C. M. Van Dongen, C. D. M. Beverwijk, *J. Organometallic Chem.* 1973, 51, C36). The efficiency of the transition metal ion as a carrier is determined by the size of $\pi$-complexation, which is formed by the interaction with the alkene, wherein the size of $\pi$-complexation varies depending on electronegativity. The electronegativity is defined as a relative strength pulling a shared electron when one atom binds to another. The electronegativities of representative transition metals are shown in Table 1.

<Table 1>

| Electronegativity of a transition metal | | | | | | |
|---|---|---|---|---|---|---|
| Transition metal | Sc | V | Cr | Fe | Ni | Cu |
| Electronegativity | 1.4 | 1.6 | 1.7 | 1.8 | 1.9 | 1.9 |
| Transition metal | Y | Nb | Mo | Ru | Pd | Ar |
| Electronegativity | 1.3 | 1.6 | 2.2 | 2.2 | 2.2 | 1.9 |
| Transition metal | La | Ta | W | Os | Pt | Au |
| Electronegativity | 1.0 | 1.5 | 2.4 | 2.2 | 2.3 | 2.5 |

The higher the metal's electronegativity is, the stronger the metal pulls an electron when the metal atom binds to another. However, if such electronegativity is too much, then there is a strong possibility of inducing an irreversible interaction with $\pi$ electron of the alkene. Thus, such metal is unfit to be a carrier for the facilitated transport. On the contrary, the metal having low electronegativity doesn't sufficiently interact with the alkene and hence cannot act as a carrier.

Therefore, in order to react reversibly with the transition metal ion with the alkene, it is preferable to use the transition metal having the electronegativity ranging from 1.6 to 2.3. Representative examples of the preferred transition metals are Mn, Fe, Co, Ni, Cu, Mo, Tc, Ru, Rh, Pd, Ag, Re, Os, Ir, Pt and a combination thereof.

The anion of the transition metal salt plays an important role in increasing a reversible reactivity between the transition metal ion and the alkene hydrocarbon. More specifically, it increases a reverse reaction velocity, which facilitates the detachment of the alkene in the form of a complex with the transition metal from an effluent. In order to implement the transition metal as a carrier for the alkene, the transition metal salt, MX, must be dissolved in the polymer and form the complex with the polymer, as described in Reaction Scheme 1:

<Reaction Scheme 1>

$$MX + [G] \rightarrow M\text{-}X\text{-}[G]$$

wherein, [G] is a reactive group of the polymer and M-X-[G] is the complex.

Generally, the difference in the tendency of anions, which are capable of forming a transition metal salt to be dissolved on the polymer, is determined by the difference in the dielectric constant of the polymer. However, when the polymer's polarity is too low, most of the anions show reduced dissolution stabilities. At this time, as a lattice energy of the transition metal salt is decreased, the tendency of anion to form a strong ion pair is also decreased, which mitigates a rapid decrease in the anion's dissolution stability.

Therefore, in order to facilitate the dissolution of the transition metal salt and improve the dissolution stability in the facilitated transport membrane of the present invention, it is preferable to select the anion of the transition metal salt having a smaller lattice energy than the given transition metal cation. The lattice energies of the representative transition metal salts are shown in Table 2.

<Table 2>

| Lattice energy of a metal salt [kj/mol][a] | | | | | | | | | | |
|---|---|---|---|---|---|---|---|---|---|---|
| | $Li^+$ | $Na^+$ | $K^+$ | $Ag^+$ | $Cu^+$ | $Co^{2+}$ | $Mo^{2+}$ | $Pd^{2+}$ | $Ni^{2+}$ | $Ru^{3+}$ |
| F- | 1036 | 923 | 823 | 967 | 1060 | 3018 | | | 3066 | |
| C1- | 853 | 786 | 715 | 915 | 996 | 2691 | 2733 | 2778 | 2772 | 5245 |
| $Br^-$ | 807 | 747 | 682 | 904 | 979 | 2629 | 2742 | 2741 | 2709 | 5223 |
| I- | 757 | 704 | 649 | 889 | 966 | 2545 | 2630 | 2748 | 2623 | 5222 |
| CN | 849 | 739 | 669 | 914 | 1035 | | | | | |
| $NO_3^-$ | 848 | 756 | 687 | 822 | 854[b] | 2626 | | | 2709 | |
| $BF_4^-$ | 705[b] | 619 | 631 | 658[b] | 695[b] | 2127 | | | 2136 | |
| $ClO_4^-$ | 723 | 648 | 602 | 667[b] | 712[b] | | | | | |
| $CF_3SO_3^-$ | 779[b] | 685[b] | 600[b] | 719[b] | 793[b] | | | | | |
| $CF_3CO_2^-$ | 822[a] | 726[b] | 658[b] | 782[b] | 848[b] | | | | | |

[a]) *See* H.D.B. Jenkins, CRC Handbook, 74th Ed., 12-13 (1993).

[b]) It has been found that there is a good linearity having a correlation coefficient of more than 0.94 by calculating the complex energy for the formation of an ion pair such as $M^+(g) + X^-(g) \rightarrow MX(g)$ according to Becke3LYP method of Density Function Theory (DFT). DFT uses a principal crude function of 6-311+G* (Becke3/6-311 + G*//Becke3/6-311+G*) and analyzes the calculated values with a linear regression of the lattice energy disclosed in the above document [a]). Therefore, the lattice energy of salts, which are not disclosed in the document, is presumed by using the above correlation coefficient.

The preferred metal salts (among the salts listed in Table 2) are $F^-$, $Cl^-$, $Br^-$ , $I^-$, $CN^-$, $NO_3^-$ and $BF_4^-$, which are capable of forming a salt with $Ag^+$ or $Cu^+$. However, these anions are provided as examples and the anions that are employable in the present invention are not limited to the anions listed in Table 2.

Generally, the dissolution stability of the anions is represented as $F^- << Cl^- < Br^- < I^- \sim SCN^- < ClO_4^- \sim CF_3SO_3^- < BF_4^- \sim AsF_6^-$ (in order), wherein the anion located on the right side has a smaller lattice energy than the one located to its left. This shows a significantly reduced tendency to form a strong ion pair with the cation of the transition metal salt. Numerous anions having the smaller lattice energies, which are suitable for the facilitated transport membrane of the present invention, have been widely used for the preparation of an electrochemical device such as a cell and an electrochemical capacitor. Representative examples of the preferred anions are $SCN^-$, $ClO_4^-$, $CF_3SO_3^-$, $BF_4^-$, $AsF_6^-$, $PF_6^-$, $SbF_6^-$, $AlCl_4^-$, $N(SO_2CF_3)_2^-$ and $C(SO_2CF_3)_3^-$. However, these anions are provided as examples and are not intended to limit the scope of the anions that may be used.

Further, the facilitated transport membrane of the present invention may utilize $(M_1)_x(M_2)_{x'}X_y$ or $(M_1)_x(X_1)_y(M_2)_{x'}(X_2)_{y'}$. Alternatively, it may utilize a complex salt of a transition metal, such as an organic salt-transition metal salt (wherein, $M_1$ and $M_2$ are cations, $X$, $X_1$ and $X_2$ are anions, and x, x', y and y' are valences), and a physical mixture of said complex salt of a transition metal and one or more salts, as well as a single salt of a transition metal.

Representative examples of the preferred complex salts of a transition metal are $RbAg_4I_5$, $Ag_2HgI_4$, $RbAg_4I_4CN$, $AgHgSI$, $AgHgTeI$, $Ag_3SI$, $Ag_6I_4WO_4$, $Ag_7I_4AsO_4$, $Ag_7I_4PO_4$, $Ag_{19}I_{15}P_2O_7$, $Rb_4Cu_{16}I_7Cl_{13}$, $Rb_3Cu_7Cl_{10}$, $AgI$-(tetraalkyl ammonium iodide), $AgI$-$(CH_3)_3SI$, $C_6H_{12}N_4 \cdot CH_3I$-$CuI$, $C_6H_{12}N_4 \cdot 4CH_3Br$-$CuBr$, $C_6H_{12}N_4 \cdot 4C_2H_5Br$-$CuBr$, $C_6H_{12}N_4 \cdot 4HCl$-$CuCl$, $C_6H_{12}N_2 \cdot 2CH_3I$-$CuI$, $C_6H_{12}N_2 \cdot 2CH_3Br$-$CuBr$, $C_6H_{12}N_2 \cdot 2CH_3Cl$-$CuCl$, $C_5H_{11}NCH_3I$-$CuI$, $C_5H_{11}NCH_3Br$-$CuBr$ and $C_4H_9ON \cdot CH_3I$-$CuI$. However, since it is possible to make numerous combinations similar to the complex salts or the salt mixtures illustrated above within the scope of the present invention, the complex salts of the transition metal employable in the present invention are not limited to the above.

The polymer used in the polymer electrolyte according to the present invention has to be capable of complexing with the metal ion of the transition metal salt. Preferably, the polymer including oxygen capable of complexing with the metal salt at a main chain or a side chain of the polymer can be used. Representative examples of the preferred polymers are, but not limited to, polymethylene oxide (PMO), polyethylene oxide (PEO), polyacrylamide, polyvinyl pyrrolidone (PVP), poly(2-ethyl-2-oxazoline) (POZ), polyacrylate, polymetacrylate, a copolymer thereof and a mixture thereof.

The ionic liquid used in the present invention means an ionic salt, which exists in a liquid state at 100 °C or below. The ionic liquid included in the polymer electrolyte functions as a plasticizer to improve the motility of a polymer chain and to increase the cation activity of the metal salt by complexing its cations with the anions of the transition metal salt.

Representative examples of the preferred ionic liquids are, but not limited to, imidazoliums such as 1-butyl-3-methyl imidazolium nitrate, 1-ethyl-3-methyl imidazolium tetrafluoroborate, 1-ethyl-3-methyl imidazolium trifluoromethane sulfonate, 3-methyl-N-butyl-pyridinium tetrafluoroborate, 3-methyl-N-butyl-pyridinium trifluoromethanesulfonate, N-butyl-pyridinium tetrafluoroborate, 1-butyl-2,3-dimethylimidazolium tetrafluoroborate, 1-butyl-2,3-dimethylimidazolium trifluoromethanesulfonate and the like. Further, any types of the ionic liquid, which include a single ionic liquid, a derivative containing the ionic liquid as a main chain or a side chain, or a physical mixture of these ionic liquids, can be applied to the present invention unless it deviates from the scope of the present invention.

The porous supported membrane, which may be employable in the present invention, includes all the membranes displaying good permeability and capable of maintaining sufficient mechanical strength. For example, all the conventional porous polymer membranes and ceramic membranes can be employable. There is no limitation as to the type of supported membrane to be used (e.g., plate, tube, pipe and the like).

The facilitated transport membrane of the present invention is prepared by coating the surface of the porous supported membrane with the polymer electrolyte solution and then drying the membrane. The polymer electrolyte solution is prepared by dissolving the transition metal salt, the polymer and the ionic liquid in a liquid solvent. The solvent used in this step may include all the solvents capable of dissolving the transition metal, the polymer and the ionic liquid without causing harmful effect on the supported membrane.

The coating of the supported membrane with the polymer electrolyte solution may be carried out according to any one of the conventional methods known in the art (e.g., Blade/Knife coating method, Mayer Bar coating method, Dip coating method, Air Knife coating method and the like).

It is preferable to maintain the coating thickness of the solid electrolyte, which is formed on the surface of the supported membrane, after drying it as thin as possible in order to increase the membrane's permeability. However, if the dried thickness of the solid electrolyte layer is too thin, then all the pores of the porous supported membrane may not get covered completely. Or, a puncture may be formed on the membrane due to the difference in the loading pressure during the operation, which causes the deterioration of selectivity. Therefore, it is preferable to maintain the dried thickness of the solid electrolyte layer in the range from 0.05 to 10 µm, and more preferably from 0.1 to 3 µm.

The facilitated transport membrane also shows high permeability to the alkene hydrocarbon. The facilitated transport membrane of the present invention displays high selectivity for the alkene hydrocarbon far beyond that of the previously reported membrane. Further, it is capable of maintaining its activity under a totally dried condition since it utilizes the solid electrolyte comprising the metal salt and the nonvolatile polymer. In addition, since the facilitated transport membrane of the present invention doesn't contain any ingredient capable of volatilizing during the operation, it maintains high stability during a long operation time. Thus, it is suitable to be applied to the separation of alkane/alkene hydrocarbons.

The present invention will now be described in detail with reference to the following examples, which are not intended to limit the scope of the present invention.

**Example 1**

0.2 g of poly(2-ethyl-2-oxazoline) (POZ, Mw = 500,000, Aldrich Co.) was dissolved in 0.8 g of water in order to obtain a homogenous and transparent polymer solution (polymer concentration was 20 weight%).

0.34 g of silver nitrate ($AgNO_3$, 99.999%, Aldrich Co.) and 0.04 g of 1-butyl-3-methyl imidazolium nitrate (Fluka Co.) were added to the polymer solution corresponding to a [C=O]:[Ag]:[ionic liquid] molar ratio of 1:1:0.1. Apolysulfone porous membrane (Track etched membrane, 0.1 µm polysulfone, Saehan) was coated with the resulting solution using a mayer bar. As a result of observing the membrane with a scanning electron microscope (SEM) at a high magnification, the thickness of the coating layer on the membrane was about 1.5 µm. The membrane thus prepared was completely dried in a drying oven at a room temperature for 2 hours and then in a vacuum oven for 48 hours.

Further, the membrane having no 1-butyl-3-methyl imidazolium nitrate as an ionic liquid was prepared according to the same method described above.

The separation efficiency of each membrane thus prepared was measured by using a gaseous mixture of propylene/propane (50:50 volume%) at a room temperature. Then, the permeability and composition rates of the permeated gas were measured with a bubble flowmeter and a gas chromatography, respectively. The results are shown in Table 3 as a unit of GPU [1 GPU = $1 \times 10^{-6}$ cm$^3$ (STP)/cm$^2 \cdot$ cmHg $\cdot$ sec].

<Table 3>

| Pressure (psig) | POZ/AgNO$_3$/ionic liquid | | POZ/AgNO$_3$ | |
|---|---|---|---|---|
| | Mixed gas permeability (GPU) | Mixed gas selectivity (propylene/propane) | Mixed gas permeability (GPU) | Mixed gas selectivity (propylene/propane) |
| 10 | 5.4 | 32.4 | <0.1 | 1.4 |
| 20 | 5.2 | 31.0 | <0.1 | 1.2 |
| 30 | 4.6 | 28.8 | <0.1 | 1.3 |
| 40 | 4.2 | 27.9 | <0.1 | 1.2 |

As can be seen in Table 3, it has been found that when the ionic liquid was added to the membrane, the membrane's efficiency (permeability and selectivity) was significantly enhanced at all the pressure conditions.

**Example 2**

The efficiency for a long operation of the membrane prepared in Example 1 was tested at a room temperature, as follows. The separation efficiency was tested by using a gaseous mixture of propylene/propane (50:50 volume%) at 40 psig of upper part pressure and atmospheric pressure (0 psig) of permeation part pressure. Then, the permeability and composition rates of the permeated gas were measured with a bubble flowmeter and gas chromatography, respectively. The results are shown in Table 4.

<Table 4>

| Time (hour) | POZ/AgNO$_3$ | | POZ/AgNO$_3$/ionic liquid | |
|---|---|---|---|---|
| | Mixed gas permeability (GPU) | Mixed gas selectivity (propylene/propane) | Mixed gas permeability (GPU) | Mixed gas selectivity (propylene/propane) |
| 2 | <0.1 | 1.5 | 6.1 | 32.1 |
| 6 | <0.1 | 1.2 | 6.2 | 33.2 |
| 12 | <0.1 | 1.7 | 5.8 | 31.8 |
| 24 | <0.1 | 1.4 | 5.9 | 31.9 |
| 48 | <0.1 | 1.1 | 5.7 | 32.0 |
| 72 | <0.1 | 1.1 | 6.1 | 31.4 |
| 96 | <0.1 | 1.2 | 6.0 | 32.7 |
| 120 | <0.1 | 1.3 | 6.0 | 33.1 |
| 144 | <0.1 | 1.1 | 6.1 | 32.6 |

As illustrated in Table 4, the POZ/AgNO$_3$ membrane having no ionic liquid showed 2 or below selectivity and 1 GPU of permeability. The POZ/AgNO$_3$ membrane containing the ionic liquid showed 30 or more selectivity and 5 GPU or more permeability, while maintaining a high efficiency during a long operation (about 150 hours).

**Example 3**

Several membranes having the ionic liquid at various molar ratios (as described in Table 5) were prepared according to the same method described in Example 1. The selectivity and permeability of each membrane were measured according to the same method described in Example 2. The results are shown in Table 5.

<Table 5>

| Molar ratio (POZ/AgNO$_3$/ionic liquid) | Mixed gas permeability (GPU) | Mixed gas selectivity (propylene/propane) |
|---|---|---|
| 1:1:0 | <0.1 | 1.3 |

<Table 5>   (continued)

| Molar ratio (POZ/AgNO$_3$/ionic liquid) | Mixed gas permeability (GPU) | Mixed gas selectivity (propylene/propane) |
|---|---|---|
| 1:1:0.01 | 1.3 | 3.2 |
| 1:1:0.02 | 2.1 | 5.5 |
| 1:1:0.03 | 3.4 | 9.1 |
| 1:1:0.05 | 4.1 | 11.4 |
| 1:1:0.1 | 6.1 | 33.2 |
| 1:1:0.2 | 4.8 | 28.7 |
| 1:1:0.3 | 4.2 | 27.6 |
| 1:1:0.5 | 3.8 | 18.8 |

As shown in Table 5, the polymer membranes having no ionic liquid did not show any meaningful facilitated transport efficiency. However, their selectivity and permeability increased in proportion to the molar ratio of the ionic liquid and showed the maximum values at the molar ratio of 0.1.

**Example 4**

The membrane was prepared according to the same method described in Example 1, except that POZ was replaced with poly(ethylene oxide) (PEO, Mw = 1 × 10$^6$, Aldrich Co.). The efficiency for a long operation of the membrane was measured according to the same method and conditions described in Example 2. The results are shown in Table 6.

<Table 6>

| Time (hour) | PEO/AgNO$_3$ | | PEO/AgNO$_3$/ionic liquid | |
|---|---|---|---|---|
| | Mixed gas permeability (GPU) | Mixed gas selectivity (propylene/propane) | Mixed gas permeability (GPU) | Mixed gas selectivity (propylene/propane) |
| 2 | 22.1 | 1.4 | 5.2 | 11.5 |
| 6 | 21.8 | 1.2 | 5.5 | 12.0 |
| 12 | 20.2 | 1.3 | 5.4 | 11.3 |
| 24 | 21.3 | 1.2 | 5.6 | 11.8 |
| 48 | 21.4 | 1.3 | 5.0 | 11.5 |
| 72 | 22.1 | 1.3 | 5.1 | 11.2 |
| 96 | 18.5 | 1.2 | 5.2 | 11.0 |
| 120 | 15.2 | 1.4 | 5.3 | 11.5 |
| 144 | 11.1 | 1.3 | 5.4 | 12.0 |

As can be seen in Table 6, the PEO/AgNO$_3$ membrane having no ionic liquid showed high permeability at an initial stage of the operation. But, it showed a decline in permeability as the operation time increased and did not exhibit any meaningful selectivity (about 1.4 or below). Meanwhile, the PEO/AgNO$_3$/ionic liquid membrane showed above selectivity of 10 even at the initial stage of the operation and its permeability was somewhat low. However, it maintained high stability during a long operation.

**Example 5**

The membrane prepared in Example 1 was heated at various temperature conditions (as described in Table 7) for 30 min in an oven. The efficiency of each membrane was measured according to the same method described in Example 2. The results are shown in Table 7.

<Table 7>

| Temp. (°C) | POZ/AgNO$_3$/ionic liquid | | POZ/AgNO$_3$/ionic liquid | |
|---|---|---|---|---|
| | Mixed gas permeability (GPU) | Mixed gas selectivity (propylene/propane) | Mixed gas permeability (GPU) | Mixed gas selectivity (propylene/propane) |
| RT | 6.1 | 33.2 | <0.1 | 1.5 |
| 50 | 5.8 | 33.0 | <0.1 | 1.4 |
| 80 | 5.2 | 29.7 | <0.1 | 1.2 |
| 100 | 5.1 | 27.0 | <0.1 | 1.3 |

As illustrated in Table 7, a silver salt was easily reduced at a high temperature. However, the membrane containing the ionic liquid maintained a high efficiency even though it was heated to 100 °C . Since the membrane having no ionic liquid did not exhibit any separation permeable efficiency, there was no meaningful difference before and after heating.

To summarize, the invention provides a facilitated transport membrane for separating alkene hydrocarbon comprising a solid polymer electrolyte layer consisting a transition metal salt, a polymer, an ionic liquid, and a porous supported membrane. The facilitated transport membrane of the present invention shows high selectivity and permeability for the alkene hydrocarbon. It further maintains the complex's activity as a carrier during a long operation, wherein the complex is formed by an interaction of the transition metal ion with the polymer ligand within the solid polymer electrolyte.

**Claims**

1.   A facilitated transport membrane for separating alkene hydrocarbon from a mixture of alkene/alkane hydrocarbons, the facilitated transport membrane comprising a solid polymer electrolyte layer and a porous supported membrane, wherein the solid polymer electrolyte layer comprises a transition metal salt, a polymer and an ionic liquid.

2.   The facilitated transport membrane of claim 1, wherein a cation of the transition metal salt has an electronegativity ranging from 1.8 to 2.3.

3.   The facilitated transport membrane of claim 1 or 2, wherein the transition metal is selected from the group consisting of Mn, Fe, Co, Ni, Cu, Mo, Tc, Ru, Rh, Pd, Ag, Re, Os, Ir, Pt and combinations thereof.

4.   The facilitated transport membrane of one of claims 1 to 3, wherein an anion of the transition metal salt is selected from the group consisting of F$^-$, Cl$^-$, Br$^-$, I$^-$, CN$^-$, NO$_3^-$, SCN$^-$, ClO$_4^-$, CF$_3$SO$_3^-$, BF$_4^-$, AsF$_6^-$, PF$_6^-$, SbF$_6^-$, AlCl$_4^-$, N(SO$_2$CF$_3$)$_2^-$, C(SO$_2$CF$_3$)$_3^-$ and combinations thereof.

5.   The facilitated transport membrane of one of claims 1 to 4, wherein the polymer contains oxygen at a main chain or a side chain.

6.   The facilitated transport membrane of claim 5, wherein the polymer is selected from the group consisting of polymethylene oxide (PMO), polyethylene oxide (PEO), polyacrylamide, polyvinyl pyrrolidone (PVP), poly(2-ethyl-2-oxazoline) (POZ), polyacrylate, polymethacrylate, a copolymer thereof and combinations thereof.

7.   The facilitated transport membrane of one of claims 1 to 6, wherein the ionic liquid is selected from the group consisting of 1-butyl-3-methyl imidazolium nitrate, 1-ethyl-3-methyl imidazolium tetrafluoroborate, 1-ethyl-3-methyl imidazolium trifluoromethane sulfonate, 3-methyl-N-butyl-pyridinium tetrafluoroborate, 3-methyl-N-butyl-pyridinium trifluoromethanesulfonate, N-butyl-pyridinium tetrafluoroborate, 1-butyl-2,3-dimethylimidazolium tetrafluoroborate, 1-butyl-2,3-dimethylimidazolium trifluoromethanesulfonate, a derivative containing the ionic liquid as a main chain or a side chain, and combinations thereof.

8.   The facilitated transport membrane of one of claims 1 to 7, wherein the porous supported membrane is a porous polymer membrane or a porous ceramic membrane used for preparing a conventional complex membrane.

9. The facilitated transport membrane of one of claims 1 to 8, wherein the hydrocarbon mixture is a mixture comprising at least one alkene hydrocarbon and at least one alkane hydrocarbon or/and another gas.

10. The facilitated transport membrane of claim 9, wherein the alkene hydrocarbon is selected from the group consisting of ethylene, propylene, butylene, 1,3-butadiene, isobutylene, isoprene and combinations thereof; and wherein the alkane hydrocarbon is selected from the group consisting of methane, ethane, propane, butane, isobutane and combinations thereof; and wherein the other gas is selected from the group consisting of oxygen, nitrogen, carbon dioxide, carbon monoxide, hydrogen gas, water and combinations thereof.

**European Patent Office**

# EUROPEAN SEARCH REPORT

Application Number

EP 04 03 0656

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2002/162456 A1 (Y.S. KANG ET AL.) 7 November 2002 (2002-11-07) * paragraphs [0004], [0009], [0016], [0017], [0023] - [0030], [0036], [0039]; claims 1-7 * ----- | 1-10 | B01D53/22 B01D67/00 B01D69/14 B01J20/32 |
| A | US 2003/035991 A1 (D.G. COLOMBO) 20 February 2003 (2003-02-20) * paragraph [0003]; claims 13-15,22 * ----- | 1-10 | |
| A,D | US 5 062 866 A (EXXON RESEARCH AND ENGINEERING CO.) 5 November 1991 (1991-11-05) * the whole document * ----- | 1-10 | |
| A | DE 199 29 482 A (UNIVERSITÄT STUTTGART) 1 March 2001 (2001-03-01) * the whole document * ----- | 1-10 | |

TECHNICAL FIELDS
SEARCHED (Int.Cl.7)

B01D
B01J

The present search report has been drawn up for all claims

| Place of search | Date of completion of the search | Examiner |
|---|---|---|
| Munich | 3 March 2005 | Luethe, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 04 03 0656

This annex lists the patent family members relating to the patent documents cited in the above-mentioned European search report.
The members are as contained in the European Patent Office EDP file on
The European Patent Office is in no way liable for these particulars which are merely given for the purpose of information.

03-03-2005

| Patent document cited in search report | Publication date | Patent family member(s) | Publication date |
|---|---|---|---|
| US 2002162456 A1 | 07-11-2002 | KR 2002068648 A | 28-08-2002 |
| US 2003035991 A1 | 20-02-2003 | WO 02078110 A2 | 03-10-2002 |
| US 5062866 A | 05-11-1991 | NONE | |
| DE 19929482 A | 01-03-2001 | DE 19929482 A1 | 01-03-2001 |

EPO FORM P0459

For more details about this annex : see Official Journal of the European Patent Office, No. 12/82